# EUROPÄISCHE PATENTSCHRIFT

(11) **EP 3 738 194 B1**
(45) Veröffentlichungstag und Bekanntmachung des Hinweises auf die Patenterteilung: **02.12.2026**
(21) Anmeldenummer: 19700655.4
(22) Anmeldetag: 09.01.2019
(51) Int. Cl.: H02K 3/22, H02K 15/0407, H01F 41/04, H02K 3/14, B22F 1/054, B22F 7/08

(54) **VERFAHREN ZUM HERSTELLEN EINES BAUTEILS MIT EINEM HOHLRAUM**
METHOD FOR PRODUCING A COMPONENT HAVING A CAVITY
PROCÉDÉ DE FABRICATION D'UN COMPOSANT COMPRENANT UNE CAVITÉ

(30) Priorität: 12.01.2018 DE 102018200505
(43) Veröffentlichungstag der Anmeldung: 18.11.2020
(73) Patentinhaber: Fraunhofer-Gesellschaft zur Förderung der angewandten Forschung e.V., 80686 München (DE)
(72) Erfinder: SPECHT, Uwe, 28209 Bremen (DE); HEUSER, Michael, 28205 Bremen (DE); BURCHARDT, Malte, 28325 Bremen (DE); WÖSTMANN, Franz-Josef, 48163 Münster (DE)
(74) Vertreter: Pfenning, Meinig & Partner mbB
(86) Internationale Anmeldenummer: PCT/EP2019/050468
(87) Internationale Veröffentlichungsnummer: WO 2019/137972

(56) Entgegenhaltungen:
- EP-A1- 0 091 352
- WO-A1-92/04999
- DE-A1- 102013 010 229
- DE-A1- 102013 112 325
- JP-A- H0 273 311
- US-A- 3 946 349

## Beschreibung

Die Erfindung liegt auf dem Gebiet des Maschinenbaus und befasst sich mit der Herstellung von elektrisch leitfähigen, hohlen Bauteilen. Sie ist mit besonderem Vorteil auf dem Gebiet der Elektrotechnik anwendbar. Eine wichtige Anwendung liegt bei der Herstellung gekühlter passiver elektrischer Bauteile wie beispielsweise elektrischer Leiter und insbesondere Wicklungen. Beispielsweise können solche Wicklungen bei der Herstellung umrichtergespeister Elektromotoren eingesetzt werden. Wenn bei der Herstellung solcher Wicklungen hohle Leiter verwendet werden können, so ist eine effiziente Kühlung möglich, die es ermöglicht, sehr hohe Stromdichten zu erreichen. Jedoch beschränkt sich die Anwendung der Erfindung nicht auf Antriebe oder beispielsweise Generatoren, sondern es können auch andere Elemente wie beispielsweise Drosselspulen für hochfrequente Schaltungen verwirklicht werden. Ein besonderes Merkmal bei der Verwendung hohler, elektrisch leitfähiger Bauteile liegt in der Möglichkeit, für diese eine Innenkühlung zu realisieren. Jedoch ist die Fertigung solcher Bauteile aufwendig, insbesondere wenn eine geringe Baugröße und/oder ein geringer Wandquerschnitt erreicht werden soll. In komplexen Formen ist die Herstellung solcher Bauteile bisher nur in additiven Herstellungsverfahren (3D-Druck) denkbar.

Aus der EP 0 091 352 B1 ist ein Herstellungsverfahren für einen geraden metallischen Halbleiter bekannt, bei dem ein Substrat mit mehreren Metallschichten beschichtet wird und darauf das Substrat aufgelöst wird, so dass die verbleibende Beschichtung den Hohlleiter bildet.

Aus der EP 0 216 421 A1 ist ein Verfahren zur Herstellung eines Lichtleiters bekannt, in dem zunächst ein Substrat als Kern beschichtet und darauf von der Beschichtung entfernt wird. Das Substrat wird hierzu in seiner Längsrichtung gedehnt und verringert dabei in Querrichtung seine Querschnittsmaße.

Aus der EP 0 129 453 B1 ist ein Verfahren zur Herstellung eines metallischen Hohlleiters bekannt, bei dem zunächst ein Kern mit einer Messingschicht und nachfolgend mit einer Silber- und einer Kupferschicht beschichtet wird, worauf der Kern und die Messingschicht aufgelöst werden.

Aus der US 2004/0036569 A1 ist die Formierung eines Hochfrequenzmoduls mit Hohlleitern auf oder in einem Halbleiterwafer bekannt.

Aus der DE 35 08 794 C2 ist die Herstellung eines Spritzgießkörpers in einer Spritzgießform bekannt, wobei die Form beschichtet und die Beschichtung auf den Gießling übertragen wird.

Aus der US 3 946 349 A sind Hochfrequenzspulen bekannt, die aus Litzenleitern gewickelt sind und einen Kanal für Kühlflüssigkeiten aufweisen.

Aus der Druckschrift JP H02 73311 A ist ein Verfahren zum Herstellen eines elektrisch leitfähigen Bauteils mit einem Hohlraum bekannt, bei dem auf ein auflösbares (Kupfer-)Substrat eine fluiddichte Schicht aus Gold derart aufgetragen wird, bei dem das Substrat fluiddicht von der Schicht bedeckt ist, und bei dem danach das Substrat wenigstens teilweise mittels Salpetersäure entfernt wird.

Der vorliegenden Erfindung liegt vor dem Hintergrund des Standes der Technik die Aufgabe zugrunde, ein Verfahren zum Herstellen von elektrisch leitfähigen Bauteilen mit einem Hohlraum zu schaffen, das mit geringem Aufwand und Kosten die Herstellung von komplexen Formen erlaubt.

Die Aufgabe wird mit den Merkmalen der Erfindung gemäß Patentanspruch 1 durch ein Verfahren zum Herstellen eines elektrisch leitfähigen Bauteils gelöst. Die Patentansprüche 2 - 14 stellen vorteilhafte Ausgestaltungen des Verfahrens vor.

Die Erfindung bezieht sich zudem auf ein nicht beanspruchtes Verfahren zur Herstellung eines auflösbaren Substrates zur Verwendung in einem erfindungsgemäßen Verfahren. Die Erfindung bezieht sich somit auf ein Verfahren zum Herstellen eines elektrisch leitfähigen Bauteils mit einem Hohlraum.

Indem das elektrisch leitfähige Material auf ein Substrat aufgetragen wird, ist die Dicke und die Materialstruktur der aufgetragenen Schicht in weiten Grenzen gestaltbar. Es können dabei Schichtdicken erreicht werden, die beispielsweise mithilfe gängiger Metallgussverfahren nicht oder nur sehr schwierig erreicht werden können. Durch das Auftragen der Schicht auf die Oberfläche eines Substrates können auch komplexe Formen mit Hinterschneidungen durch einfache Auftragsverfahren erreicht werden. Die geometrische Gestaltung des oder der Hohlräume in einem mit einer solchen Schicht gebildeten Bauteil ist durch die Formgebung des Substrates in einfacher Weise gestaltbar. Mit den Verfahren wird eine fluiddichte Schicht erzeugt, die eine geschlossene Außenwand des entstehenden Bauteils bildet, so dass dieses mittels eines Fluids in seinen Hohlraum effektiv gekühlt werden kann. Die Verwendung des Hohlraums in dem Bauteil ist jedoch nicht auf eine Kühlung beschränkt, sondern es kann durch ein im Hohlraum vorgesehenes Fluid jede Art des Material- und Wärmetransportes wie beispielsweise eine Heizung, ein Temperaturausgleich oder die Leitung des Fluids als Materialtransport verwirklicht werden.

Es kann zudem vorgesehen sein, dass die tragfähige, fluiddichte Schicht in einer Schichtdicke von weniger als 20 mm, insbesondere weniger als 5 mm ausgebildet wird.

Mit dem vorgestellten Verfahren lassen sich insbesondere dünne Wanddicken der Bauteile gut verwirklichen.

Es kann außerdem vorgesehen sein, dass das Substrat strangförmig ausgebildet ist und dass die Schicht allseitig auf die Mantelfläche(n) des Substrats aufgebracht wird, derart, dass die Mantelfläche des Substrats fluiddicht abgedeckt sind.

Damit lassen sich in dem Verfahren besonders einfach drahtähnliche, hohle Bauteile herstellen.

Es lassen sich durch die verschiedenen Technologien, die zum Aufbringen von Schichten auf Substraten anwendbar sind, dünne Schichten in gewünschten Materialstrukturen ausbilden, so dass die notwendige Wanddicke für das Bauteil nur durch die Anforderungen der Stromtragfähigkeit und der Fluiddichtigkeit sowie der mechanischen Tragfähigkeit begrenzt sind.

Das Substrat kann beispielsweise als Strang mit beliebigem Querschnitt ausgebildet sein und durch das Beschichtungsverfahren allseitig mit einer fluiddichten Schicht bedeckt werden. Vor der Beschichtung kann das Substrat bereits in die Geometrie der endgültigen Spule/Wendel gelegt und anschließend beschichtet werden. Das herstellen der Vorgeometrie kann dabei analog zu einem Wickelprozess erfolgen, wobei die Vorgeometrie anschließend noch elastisch expandiert bzw. so auseinandergezogen werden können muss, dass die Windungen sich nicht berühren und beschichtbar sind. Ebenso lässt sich eine Vorgeometrie durch Umformprozesse von Halbzeugen herstellen oder einem Prozess, ähnlich dem FDM (Fused Deposition Molding) bei dem das Substartmaterial durch eine Düse in die Form der angestrebten Spule oder eine näherungsweise Form gebracht wird und die einzelnen Windungen nicht miteinander verschmolzen werden. Ergänzend kann die so erzeugte Vorform aus dem Substrat bereits verpresst oder durch eine nachträgliche Umformung in die gewünschte Endkontur umgeformt werden, wodurch sich eine hohe Ausnutzung des zur Verfügung stehenden Bauraums für die Spule bei Verwendung einfacher Vorgeometrien für das Substrat ergeben. Nach Auflösen des Substrates bleibt dann ein rohrförmiges Bauteil übrig. Der Querschnitt des Substrates kann beispielsweise kreisrund oder oval oder auch rechteckig, quadratisch, dreieckig oder polygonal gestaltet sein. Soll beispielsweise das Bauteil in Form einer Wicklung hergestellt oder weiterverarbeitet werden, so bieten sich Querschnitte an, die eine hohe Windungsdichte erlauben. Das Bauteil wird vor dem Entfernen des Substrates eiter in Form gebracht, beispielsweise durch Biegen oder Aufwickeln.

Bei der Herstellung eines strangförmigen Bauteils kann auch ein Endlosherstellungsprozess vorgesehen sein, indem ein Substrat fortlaufend durch eine Beschichtungseinrichtung bewegt und dort beschichtet wird.

Gemäß der Erfindung ist vorgesehen, dass die tragfähige Schicht durch Auftragen von Partikeln auf das Substrat aufgebracht wird. Derartige Partikel können beispielsweise Mikro- oder Nanopartikel oder auch einzelne Atome oder Cluster von Atomen oder Materialtröpfchen sein, die auf die Oberfläche des Substrates mit verschiedenen Verfahren, die weiter unten noch genauer beschrieben werden, aufgebracht werden.

Es kann in einer Ausführungsform des Verfahrens vorgesehen sein, dass das Substrat wenigstens teilweise aus einem elektrisch leitfähigen Material, insbesondere einem Metall oder einem elektrisch leitfähigen Kunststoff oder aus einem mit leitfähigen Partikeln gefüllten, elektrisch isolierenden Werkstoff wie, Keramik, Glas oder Kunststoff besteht.

Durch eine wenigstens teilweise elektrisch leitend gestaltete Ausführung des Substrates sind Beschichtungsverfahren möglich wie beispielsweise ein galvanisches Beschichtungsverfahren, das auch außenstromlos durchgeführt werden kann.

Auch andere Beschichtungsverfahren, die die Erzeugung eines Stroms oder das Anlegen einer Spannung an dem Substrat erfordern, können durch die elektrisch leitende Ausgestaltung des Substrates ermöglicht werden.

In einer Ausgestaltung des erfindungsgemäßen Verfahrens kann beispielsweise auch vorgesehen sein, dass das Substrat wenigstens teilweise aus einem elektrisch isolierenden Material, insbesondere einem Kunststoff, einem Wachs, einer Keramik oder einem thermoplastischen Werkstoff besteht. Es ist somit eine freie Auswahl aus gängigen, einfach verarbeitbaren Materialien für die Gestaltung des Substrats möglich.

Es kann dazu beispielsweise vorgesehen sein, dass das Substrat vor dem Aufbringen der tragfähigen Schicht mit einem elektrisch leitfähigen Vorbeschichtungsstoff, insbesondere mit einem Metall, insbesondere in Form von Mikro- oder Nanopartikeln oder einem leitfähigen Kunststoff oder Kohlenstoff, insbesondere in Form von Graphit oder Kohlenstoff- Nanoröhrchen vorbeschichtet wird.

Mit einer solchen Vorbeschichtung wird eine Leitfähigkeit der Oberfläche hergestellt, so dass alle elektrischen oder elektrisch unterstützten Beschichtungsverfahren erleichtert oder ermöglicht werden.

Es kann jedoch auch vorgesehen sein, dass das Substrat vor dem Aufbringen der tragfähigen Schicht mit Mikro- oder Nanopartikeln beschichtet wird, die nicht notwendig elektrisch leitend sind. Damit kann eine Haftvermittlung der nachfolgend aufgebrachten tragfähigen Schicht und/oder ein verbessertes Aufwachsen einer solchen Schicht ermöglicht werden.

Damit werden auch andere als elektrische oder elektrisch unterstützte Beschichtungsverfahren für das Substrat erleichtert.

Eine geeignete Vorbeschichtung kann auch bewirken, dass die Trennung der erzeugten Schicht von dem Substrat in einem späteren Schritt erleichtert wird.

Es kann auch vorgesehen sein, dass das Substrat vor dem Aufbringen der tragfähigen Schicht chemisch angeätzt wird.

Beispielsweise kann für die erfindungsgemäße Beschichtung vorgesehen sein, dass die tragfähige Schicht durch ein galvanisches, insbesondere elektrochemisches oder außenstromloses Verfahren auf das Substrat aufgebracht wird.

Die Vorteile des oben erläuterten Verfahrens sind die folgenden:
- Verschiedene Metalle und Legierungen einsetzbar
- Lagenweise unterschiedliche Metalle/Legierungen möglich
- Schichtdicke kontrollierbar über die Prozessparameter Zeit, Temperatur, Spannung, Strom, Konzentration u.a.
- Einsatz chemisch reiner Metalle
- Aufbau fehlerfreier/fehlerarmer Schichten
- Beschichtung komplexer Strukturen + homogene Beschichtung (Wandstärke)

Eine weitere Einsatzmöglichkeit besteht darin, dass man den nach dem Beschichtungsprozess vorliegenden Hohlleiter mit noch vorhandenem, innenliegendem Substrat leicht umformen kann, ohne die Hohlgeometrie zu zerstören. Damit ist es möglich, mehrere Leiter zu verröbeln / zu verdrillen und anschließend erst das Substrat aus dem Hohlleiter herauszubringen. Damit wird ein Leiter für sehr hohe Frequenzen mit geringen Verlusten durch Skineffekt erzeugt, der durch die mögliche Innenkühlung sehr hohe Stromdichten ermöglicht.

Es kann alternativ auch vorgesehen sein, dass die tragfähige Schicht durch ein PVD- Beschichtungsverfahren auf das Substrat aufgebracht wird.

Solche PVD-Verfahren (Physical Vapor Deposition-Verfahren) können beispielsweise folgende Verfahren umfassen: thermisches Verdampfen von Stoffen mit anschließendem Niederschlag, Elektronenstrahlverdampfen, Laserstrahlverdampfen, Lichtbogenverdampfen, Molekularstrahlepitaxie. Zudem besteht eine Beschichtungsmethode im sogenannten Sputtern, bei dem das Ausgangsmaterial durch Ionenbeschuss zerstäubt und in die Gasphase überführt wird. Zudem ist auch die Ionenstrahl-gestützte Deposition, lonenplattieren und das ICBD-Verfahren (Ionized Cluster Beam Deposition-Verfahren) anwendbar.

Grundsätzlich ist festzustellen, dass auch mehrere Schichten nacheinander aufgebracht werden können, die später die Wand des herzustellenden hohlen Bauteils bilden. So ist beispielsweise denkbar, dass eine erste Schicht die elektrische Leitfähigkeit und die mechanische Stabilität sicherstellt, während eine auf diese aufgebrachte Schicht die Fluiddichtigkeit sicherstellt oder umgekehrt.

Es kann auch grundsätzlich vorgesehen sein, dass die tragfähige Schicht durch ein CVD- Beschichtungsverfahren auf das Substrat aufgebracht wird.

Unter den CVD-Verfahren (Chemical Vapor Deposition-Verfahren) werden chemische Gasphasenabscheidungsverfahren verstanden, bei denen Stoffe aus der Gasphase auf dem Substrat niedergeschlagen werden und dort mit der Oberfläche bzw. den an der Oberfläche befindlichen Materialien, beispielsweise Vorbeschichtungen chemisch unter Ausbildung einer Schicht reagieren.

Zur Herstellung besonderer Formen der hergestellten Bauteile kann beispielsweise vorgesehen sein, dass die tragfähige Schicht derart auf das Substrat aufgebracht wird, dass sie das Substrat allseitig fluiddicht umgibt.

Unter der allseitigen Fluiddichtigkeit kann dabei verstanden werden, dass das Substrat tatsächlich vollständig durch die Beschichtung abgeschlossen und abgedichtet wird. Es kann jedoch auch insbesondere bei strangförmigen Substraten vorgesehen sein, dass die Mantelflächen des Substrates vollständig fluiddicht abgedichtet werden, während wenigstens eine oder auch mehrere Stirnseiten des Substrates unbeschichtet bleiben. Es kann jedoch auch vorgesehen sein, dass das Substrat zunächst allseitig fluiddicht beschichtet wird und dass danach Teile der Beschichtung in einem nachfolgenden Bearbeitungsschritt entfernt werden, um den Hohlraum in dem hergestellten Bauteil zunächst durch Entfernen des Substrates herzustellen und später durch Einfüllen eines Fluids nutzen zu können.

Weiter kann als Beschichtungsverfahren vorgesehen sein, dass die tragfähige Schicht durch ein Plasmaspritzverfahren oder durch Eintauchen des Substrats in eine Metallschmelze auf das Substrat aufgebracht wird.

Es ist grundsätzlich vorgesehen, dass das Substrat nach dem Aufbringen der tragfähigen leitenden Schicht gemeinsam mit der Schicht verformt wird. Dies kann insbesondere dann sinnvoll sein, wenn das Substrat die Form einer Wendel oder einer Spirale aufweist.

Beispielsweise kann vorgesehen sein, dass ein wendelförmiges oder spiralförmiges Substrat hergestellt und dies vor dem Auftrag der Beschichtung aus einem elektrisch leitfähigen Material in Längsrichtung der Wendel/Spirale auseinandergezogen und darauf, insbesondere in der extrahierten Form, mit der Beschichtung aus einem elektrisch leitfähigen Material versehen wird. Zudem kann im extrahierten Zustand auf die leitfähige Beschichtung noch eine elektrisch isolierende Beschichtung aufgebracht werden, beispielsweise aus einem Lack oder Kunststoff oder einem Metalloxid. Danach kann das Substrat mit der Beschichtung in Längsrichtung komprimiert werden, oder es kann, falls die Extraktion wenigstens teilweise elastisch stattgefunden hat und das Substrat elastisch ist, auch durch Relaxation des Substrats ein Übergang in eine wenigstens teilweise in Längsrichtung der Wendel kontrahierte Form erfolgen. Ein solches Vorgehen kann beispielsweise sinnvoll sein, wenn der Abstand zwischen einzelnen Windungen des Substrats im spannungslosen Zustand klein ist, beispielsweise kleiner als 2 mm oder kleiner als 1 mm. Eine elektrische Kontaktierung benachbarter Windungen kann so verhindert werden.

Es ist gemäß der Implementierung des Verfahrens vorgesehen, dass das Substrat nach dem Aufbringen der tragfähigen Schicht gemeinsam mit dieser verformt, insbesondere gebogen wird und dass danach das Substrat wenigstens teilweise entfernt wird. Vor der Verformung kann die tragfähige elektrisch leitende Schicht zudem noch mit einer elektrisch isolierenden Deckschicht versehen werden, beispielsweise durch Tauchen, Spritzen, Streichen, Sprühen oder Pulverbeschichten oder durch Aufbringen einer Reaktionsschicht, insbesondere einer Oxidschicht, beispielsweise durch eine chemische Behandlung mit einem Reaktionspartner.

Durch die Verformung des Bauteils gemeinsam mit dem Substrat kann, insbesondere dann, wenn das Bauteil als strangförmiger hohler elektrischer Leiter ausgebildet ist, beispielsweise bei einer Verbiegung der Querschnitte des Bauteils besonders stabil beibehalten werden.

Es kann auch vorgesehen sein, dass nach Auftrag der Beschichtung das Halbzeug aus Substrat und Beschichtung in eine Spulengeometrie verformt und anschließend verpresst wird, um einen Spulenkörper auf einen zur Verfügung stehenden Bauraum zu kalibrieren und ein flächiges Anliegen von Windung zu Windung des Spulenkörpers zu erzielen.

Weiter kann vorgesehen sein, dass mehrere als strangförmige Leiter ausgebildete elektrisch leitfähige Bauteile gemeinsam mit dem Substrat miteinander verdrillt (verröbelt) werden, um eine Reduzierung des Skineffektes zu erzielen, wobei insbesondere eine Isolation der Leiter/elektrisch leitenden Bauteile gegeneinander vor oder nach dem Verdrillen erfolgt.

Zum Entfernen des Substrats von der tragfähigen Schicht kann vorgesehen sein, dass das Substrat durch Ausbrennen, Auflösen in einem Lösungsmittel, mechanische Zerkleinerung, chemische Zersetzung, Schmelzen, Verdampfen oder Sublimieren von der tragfähigen Schicht gelöst und wenigstens teilweise entfernt wird.

Dies kann nach einer vollständigen Beschichtung des Substrates in einem nachfolgenden Prozessschritt geschehen oder auch bei fortlaufender Herstellung eines Endlosbauteils beispielsweise eines Rohres in einem kontinuierlich nach der Beschichtung durchlaufenen Prozessschritt. Das Entfernen des Substrats geschieht nach einer Verformung, beispielsweise Biegung, des Bauteils zur Herstellung der endgültigen Form.

Bei einem nicht beanspruchten, besonderen Verfahren zur Herstellung eines Substrates zur Verwendung in einem der oben genannten Verfahren kann vorgesehen sein, dass das Substrat in einer Gußform gegossen wird, die mit einem Material beschichtet ist, welches auf der Oberfläche des Substrats haftet und welches so beschaffen ist, dass es die Abscheidung und/oder die Haftung der tragfähigen Schicht auf dem Substrat ermöglicht oder erleichtert.

Grundsätzlich kann das Substrat als Kern in einem vorgelagerten Gießverfahren in einfachen oder auch komplexen Formen hergestellt werden, wobei man sich der aus der Gießereitechnik bekannten Verfahren bedienen kann. Die Beschichtung der für das Substrat verwendeten Gießform in der genannten Art ermöglicht die Übertragung dieser Beschichtung auf die Oberfläche des Substrats und erleichtert die nachfolgend angewendeten Beschichtungsverfahren.

Im Folgenden wird die Erfindung anhand von Figuren einer Zeichnung gezeigt und nachfolgend erläutert. Dabei zeigt
Figur 1 ein strangförmiges Substrat in einer perspektivischen Ansicht,
Figur 2 schematisch den Vorgang der Beschichtung,
Figur 3 in perspektivischer Ansicht ein beschichtetes Substrat,
Figur 4 das hergestellte Bauteil nach Entfernen des Substrates in perspektivischer Ansicht,
Figur 5 eine Wicklung eines erfindungsgemäß hergestellten rohrförmigen Bauteils,
Figur 6 ein Bauteil, das vor Entfernung des Substrates gebogen worden ist, sowie
Figuren 7 und 8 ein wendelförmiges Substrat im extrahierten und komprimierten Zustand.

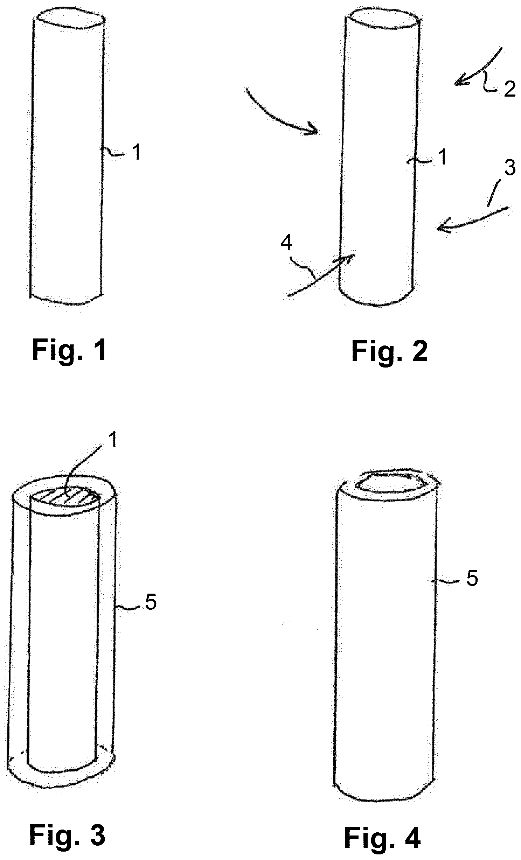

Die Figur 1 zeigt ein zylindrisches, strangförmiges Substrat 1, das im Rahmen des erfindungsgemäßen Verfahrens beschichtet wird. Das Substrat 1 ist ein einfaches Beispiel, das für die Herstellung eines hohlen Wicklungsdrahtes mit hohlzylindrischem Querschnitt verwendet werden kann.

In der Figur 2 ist das Substrat 1 dargestellt, wobei durch Pfeile 2, 3, 4 angedeutet ist, dass Partikel, beispielsweise Atome, Mikro- oder Nanopartikel oder Tröpfchen von außen auf die Oberfläche des Substrates 1 aufgebracht werden. Dazu kann das Substrat fakultativ eine Vorbeschichtung tragen, die beispielsweise elektrisch leitend sein kann, um Beschichtungsverfahren anwenden zu können, die das Anlegen einer Spannung erfordern, oder die beispielsweise als galvanische Beschichtung ohne Außenspannung funktionieren. In der Figur 3 ist das Substrat 1 mit einer aufgebrachten tragfähigen Schicht 5 dargestellt. Dabei ist die Darstellung schematisch und die Dicke der Schicht 5 sowie das Verhältnis der Schichtdicke zum Durchmesser des Substrates sind nur beispielhaft. In vielen Fällen wird die Dicke der Schicht/Beschichtung 5 im Verhältnis zum Durchmesser des Substrates 1 geringer sein.

In der Figur 4 ist das Endprodukt in Form eines hohlen Rohres 5 dargestellt, wobei das Substrat 1 durch Verflüssigung, Ausbrennen oder anderweitige Entfernung von der Schicht/Beschichtung 5 getrennt ist.

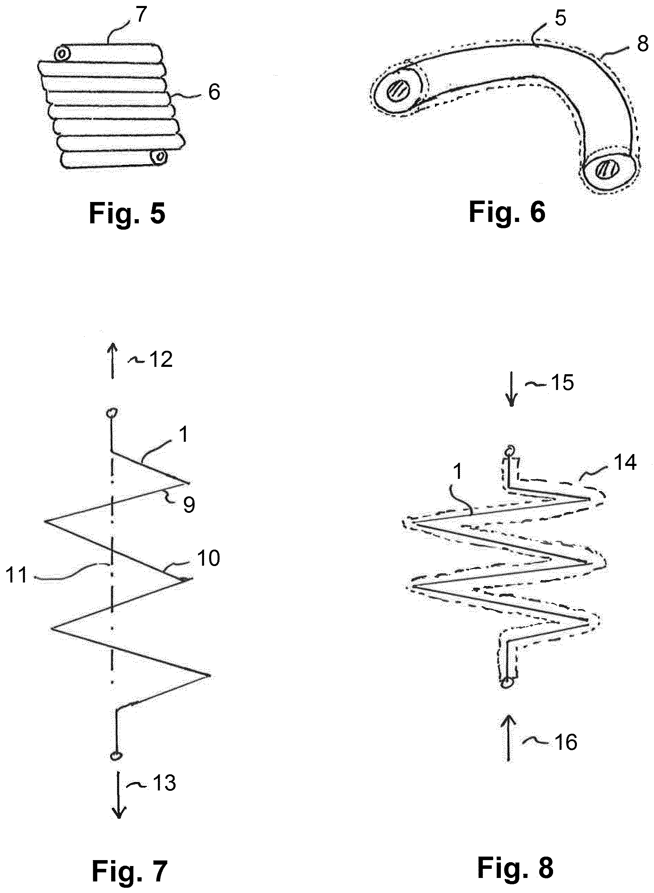

In der Figur 5 ist eine wendelförmige Wicklung 6 dargestellt, die aus einem gebogenen Rohr 7 besteht. Beispielsweise, nicht gemäß der beanspruchten Erfindung, kann dies in der gebogenen Form wie in der Figur 5 dargestellt mittels eines ebenso geformten Substrates mit einer auf diesem aufgebrachten Metallschicht hergestellt sein. Es ist erfindungsgemäß möglich, zunächst ein gestrecktes gerades strangförmiges Substrat zu verwenden, dieses zu beschichten und dadurch ein gerades Rohr herzustellen. Dies kann, wie dies beispielsweise in der Figur 6 dargestellt ist, gemeinsam mit dem beschichteten Substrat gebogen werden. Nachdem das Substrat gemeinsam mit der Beschichtung in die gewünschte Form gebracht worden ist, kann das Substrat entfernt werden. Eine derartige Verformung des hergestellten rohrförmigen Bauteils gemeinsam mit dem darin noch befindlichen Substrat hat den Vorteil, dass bei der Verformung der Querschnitt durch Stützung mittels des Substrats in diesem erhalten bleibt und ein Knicken des rohrförmigen Bauteils vermieden werden kann. Figur 6 stellt optional noch in gestrichelter Form eine isolierende Beschichtung 8 der elektrisch leitenden Schicht 5 dar.

Die Figur 7 zeigt ein Substrat in Form einer schematisch in einer Seitenansicht dargestellten Wendel, bei der im entspannten Zustand die einzelnen Windungen 9, 10 eng beieinander liegen. Die Figur 7 zeigt, dass das Substrat entlang der Längsachse 11 der Wendel durch Zugkräfte 12, 13 vor der Beschichtung auseinandergezogen wird. Das Substrat kann dabei einem elastischen Material, beispielsweise einem elastischen Polymer, bestehen.

In Figur 8 ist die Wendel nach der Beschichtung dargestellt, wobei die Beschichtung schematisch durch die gestrichelten Linien 14 angedeutet ist. Die Beschichtung kann aus der elektrisch leitfähigen, tragfähigen Metallschicht bestehen, die später das leitende Bauteil bildet. Die Beschichtung kann jedoch auch eine elektrisch isolierende Deckschicht aus einem Kunststoff oder einem Oxid oder einem anderen Material mit umfassen. Die Figur 8 zeigt einen in Längsrichtung der Wendel komprimierten Zustand, der sich entweder nach Wegfall der Zugkräfte 12, 13 durch Relaxation des Substratmaterials einstellt oder aktiv durch die Anwendung von Kompressionskräften 15, 16 in Längsrichtung der Wendel erreicht wird.

Im Folgenden werden zwei Ausführungsbeispiele anhand von konkreten Materialien geschildert.

### Nicht beanspruchtes Beispiel:

Ein Wachs, das für die gießtechnische Herstellung komplexer Strukturen geeignet ist, wird mit einem Graphit gemischt. Dadurch wird in dem Gemisch eine elektrische Leitfähigkeit erzielt, die durch den Anteil eingemischten Graphits steuerbar ist (beispielsweise 1/1000 1/Ohm*cm). Der Widerstand wird so gewählt, dass er für die galvanische Abscheidung einer Kupferummantelung an dem Substrat ausreichend klein ist. Durch die Art der Beimischung von Graphit kann auch die Oberflächenstruktur des wachsförmigen Substrats beeinflusst werden. Durch Gestaltung der Oberflächenstruktur des Substrates, beispielsweise Einstellung einer bestimmten Rauigkeit oder Unebenheit, wird diese Form in die Innenoberfläche des durch die aufgetragene Schicht gebildeten Bauteils übertragen, so dass auch das Strömungsverhalten eines Fluids durch das hohle Bauteil determiniert werden kann.

Für die galvanische Beschichtung kann eine Kupfersulfatlösung verwendet werden, und das Bauteil wird kathodisch polarisiert. Durch die Abscheidungsparameter kann die Schichtdicke der Kupferummantelung in einem weiten Bereich zwischen wenigen Mikrometern bis hin zu einigen Millimetern variiert werden.

Nach Abscheidung des Kupfers wird das Wachs des Substrates bei 120°C herausgeschmolzen und somit entfernt.

### Ausführungsbeispiel:

Eine komplexe geometrische Form eines Substrates kann zunächst im Wachsspritzgussverfahren oder durch einen Umformprozess aus einem Werkzeug hergestellt werden. Dabei sind außer der Verwendung von Spritzgussverfahren auch spanende Verfahren alternativ oder ergänzend denkbar.

Das so entstandene Substrat kann im Sputterverfahren mit einer dünnen Schicht Platin oder Palladium versehen werden, um eine elektrische Leitfähigkeit der Oberfläche des Substrates zu erzeugen. Darauf kann das Substrat galvanisch mit Kupfer beschichtet werden. In einem nachfolgenden Schritt kann dann das Wachs/Substrat durch Erhitzen aus dem Bauteil ausgeschmolzen werden.

Die Erfindung ermöglicht es, komplex geformte metallische Bauteile mit einem innenliegenden Hohlraum beispielsweise in Form eines Längskanals und variabel einstellbarer Wandstärke herzustellen. Die metallische Beschichtung kann mit Reinmetallen beispielsweise Kupfer oder Aluminium mit höchster Reinheit erfolgen, so dass beste elektrische Leitfähigkeiten erreicht werden können. Derartige Materialien lassen sich in Gussverfahren oder Umformverfahren nicht einfach verarbeiten, ohne Schädigungen des Gefüges zu riskieren, die unter anderem auch zu Undichtigkeiten führen können.

Mittels des Verfahrens können mit Metall beschichtete Werkzeuge aus Profildrähten hergestellt werden, die in einem nachfolgenden Prozessschritt auf das richtige Maß abgelängt werden und durch Umformung in die gewünschte Geometrie beispielsweise einer Spule gebracht werden.

Insbesondere bei der Herstellung innengekühlter elektrischer Leiter können Spulen oder Wicklungen hergestellt werden, die eine deutlich gesteigerte Stromdichte gegenüber Spulen/Wicklungen des Standes der Technik ermöglichen. Hierdurch können beispielsweise mechanische Antriebe mit gesteigerter Drehmomentdichte ermöglicht werden.

## Patentansprüche

1. Verfahren zum Herstellen eines elektrisch leitfähigen Bauteils (5) mit einem Hohlraum, wobei auf ein auflösbares Substrat (1) eine tragfähige, fluiddichte Schicht (5) aus einem elektrisch leitfähigen Material in Form von Partikeln, insbesondere in einer Schichtdicke von mehr als 3 Mikrometer insbesondere mehr als 20 Mikrometer derart aufgetragen wird, dass das Substrat (1) fluiddicht von der Schicht (5) bedeckt ist und dass danach das Substrat (1) aufgelöst und wenigstens teilweise entfernt wird, **dadurch gekennzeichnet, dass** das Substrat (1) nach dem Aufbringen der tragfähigen Schicht (5) gemeinsam mit dieser verformt, insbesondere gebogen wird und dass danach das Substrat wenigstens teilweise entfernt wird.

2. Verfahren nach Anspruch 1, **dadurch gekennzeichnet, dass** die tragfähige, fluiddichte Schicht (5) in einer Schichtdicke von weniger als 20 mm, insbesondere weniger als 5 mm ausgebildet wird.

3. Verfahren nach Anspruch 1 oder 2, **dadurch gekennzeichnet, dass** das Substrat strangförmig ausgebildet ist und dass die Schicht (5) allseitig auf die Mantelfläche(n) des Substrats (1) aufgebracht wird, derart, dass die Mantelfläche(n) des Substrats fluiddicht abgedeckt sind.

4. Verfahren nach einem der Ansprüche 1 bis 3, **dadurch gekennzeichnet, dass** das Substrat (1) wenigstens teilweise aus einem elektrisch leitfähigen Material, insbesondere einem Metall oder einem elektrisch leitfähigen Kunststoff oder aus einem mit leitfähigen Partikeln gefüllten, elektrisch isolierendem Werkstoff besteht.

5. Verfahren nach einem der Ansprüche 1 bis 4 **dadurch gekennzeichnet, dass** das Substrat (1) wenigstens teilweise aus einem elektrisch isolierenden Material, insbesondere einem Kunststoff, einem Wachs, einer Keramik oder einem thermoplastischen Werkstoff besteht.

6. Verfahren nach einem der Ansprüche 1 bis 5, **dadurch gekennzeichnet, dass** das Substrat (1) vor dem Aufbringen der tragfähigen Schicht mit einem elektrisch leitfähigen Vorbeschichtungsstoff, insbesondere mit einem Metall, insbesondere in Form von Mikro- oder Nanopartikeln oder einem leitfähigen Kunststoff oder Kohlenstoff, insbesondere in Form von Graphit oder Kohlenstoff- Nanoröhrchen vorbeschichtet wird.

7. Verfahren nach einem der Ansprüche 1 bis 6, **dadurch gekennzeichnet, dass** die tragfähige Schicht (5) durch ein galvanisches, insbesondere elektrochemisches oder außenstromloses Verfahren, ein PVD- Beschichtungsverfahren oder ein CVD- Beschichtungsverfahren auf das Substrat (1) aufgebracht wird.

8. Verfahren nach einem der Ansprüche 1 bis 7, **dadurch gekennzeichnet, dass** die tragfähige Schicht (5) durch ein Plasmaspritzverfahren oder durch Eintauchen des Substrats in eine Metallschmelze auf das Substrat (1) aufgebracht wird.

9. Verfahren nach einem der Ansprüche 1 bis 8, **dadurch gekennzeichnet, dass** die tragfähige Schicht (5) derart auf das Substrat (1) aufgebracht wird, dass sie das Substrat allseitig fluiddicht umgibt.

10. Verfahren nach einem der Ansprüche 1 bis 9, **dadurch gekennzeichnet, dass** das Substrat (1) durch Ausbrennen, Auflösen in einem Lösungsmittel, mechanische Zerkleinerung, chemische Zersetzung, Schmelzen, Verdampfen oder Sublimieren von der tragfähigen Schicht (5) gelöst und wenigstens teilweise entfernt wird.

11. Verfahren nach einem der Ansprüche 1 bis 10, bei dem ein wendelförmiges Substrat hergestellt und dies vor dem Auftrag der Beschichtung in Längsrichtung der Wendeln auseinandergezogen und darauf mit der Beschichtung versehen wird.

12. Verfahren nach einem der Ansprüche 1 bis 11, bei dem nach Auftrag der Beschichtung auf das Substrat das Halbzeug aus Substrat und Beschichtung verformt oder umformtechnisch bearbeitet wird.

13. Verfahren nach einem der Ansprüche 1 bis 12, bei dem nach Auftrag der Beschichtung das Halbzeug aus Substrat (1) und Beschichtung (5) in eine Spulengeometrie verformt und anschließend verpresst wird, um einen Spulenkörper auf einen zur Verfügung stehenden Bauraum zu kalibrieren und ein flächiges Anliegen von Windung zu Windung des Spulenkörpers zu erzielen, und/oder bei dem mehrere als strangförmige Leiter ausgebildete elektrisch leitfähige Bauteile gemeinsam mit dem Substrat miteinander verdrillt / verröbelt werden, um eine Reduzierung des Skineffektes zu erzielen, wobei insbesondere eine Isolation der Leiter/elektrisch leitenden Bauteile gegeneinander vor oder nach dem Verdrillen erfolgt.

14. Verfahren zur Herstellung eines Substrats zur Verwendung in einem Verfahren nach einem der Ansprüche 1 bis 13, **dadurch gekennzeichnet, dass** das Substrat (1) in einer Gußform gegossen wird, die mit einem Material beschichtet ist, welches auf der Oberfläche des Substrats haftet und welches so beschaffen ist, dass es die Abscheidung und/oder die Haftung der tragfähigen Schicht (5) auf dem Substrat (1) ermöglicht oder erleichtert.

## Claims

1. A method for producing an electrically conductive component (5) having a cavity, wherein a load-carrying, fluid-tight layer (5) made of an electrically conductive material is applied onto a soluble substrate (1), in particular in a layer thickness of more than 3 micrometers, and in particular more than 20 micrometers, in such a way that the substrate (1) is covered by the layer (5) in a fluid-tight manner, and that thereafter the substrate (1) is dissolved and at least partially removed, **characterized in that** the substrate (1) is deformed together with the load-carrying layer (5) after the same has been applied, and in particular is bent, and thereafter the substrate is at least partially removed.

2. The method according to claim 1, **characterized in that** the load-carrying, fluid-tight layer (5) is formed in a layer thickness of less than 20 mm, and in particular less than 5 mm.

3. The method according to claim 1 or 2, **characterized in that** the substrate has a strand-shaped design, and that the layer (5) is applied to the lateral surface(s) of the substrate (1) on all sides, such that the lateral surface(s) of the substrate is or are covered in a fluid-tight manner.

4. A method according to any one of claims 1 to 3, **characterized in that** the substrate (1) is at least partially made of an electrically conductive material, in particular a metal or an electrically conductive plastic material, or of an electrically insulating material filled with conductive particles.

5. A method according to any one of claims 1 to 4, **characterized in that** the substrate (1) is at least partially made of an electrically insulating material, in particular a plastic material, a wax, a ceramic material or a thermoplastic material.

6. A method according to any one of claims 1 to 5, **characterized in that** the substrate (1) is pre-coated with an electrically conductive precoating substance, in particular with a metal, in particular in the form of microparticles or nanoparticles or a conductive plastic material or carbon, in particular in the form of graphite or carbon nanotubes, before the load-carrying layer is applied.

7. The method according to any of claims 1 to 6, **characterized in that** the load-carrying layer (5) is applied to the substrate (1) by way of a galvanic, in particular electrochemical or electroless method, a PVD coating method, or a CVD coating method.

8. The method according to any one of claims 1 to 7, **characterized in that** the load-carrying layer (5) is applied to the substrate (1) by way of a plasma spraying process or by immersing the substrate in molten metal.

9. The method according to any one of claims 1 to 8, **characterized in that** the load-carrying layer (5) is applied to the substrate (1) so as to surround the substrate in a fluid-tight manner on all sides.

10. The method according to any one of claims 1 to 9, **characterized in that** the substrate (1) is detached from the load-carrying layer (5) by burning out, dissolution in a solvent, mechanical crushing, chemical decomposition, melting, evaporation or sublimation, and is at least partially removed.

11. The method according to any one of claims 1 to 10, wherein a helical substrate is created and extended in the longitudinal direction of the helices before the coating is applied, and thereupon is provided with the coating.

12. The method according to any one of claims 1 to 11, **characterized in that** the semi-finished product comprising the substrate and the coating is deformed or processed by way of forming, after the coating has been applied to the substrate.

13. The method according to any one of claims 1 to 12, wherein, after the coating has been applied, the semi-finished product comprising the substrate (1) and the coating (5) is deformed into a coil geometry, and is subsequently pressed, so as to calibrate a coil body for an available installation space, and achieve a planar abutment of one turn to the next of the coil body, and/or multiple electrically conductive components, which are designed as strand-shaped conductors, are twisted (transposed) with one another, together with the substrate, so as to achieve a reduction in the skin effect, wherein in particular an insulation of the conductors/electrically conducting components with respect to one another is carried out prior to or after twisting.

14. A method for producing a substrate for use in a method according to any one of the claims 1 to 13, **characterized in that** the substrate (1) is poured into a mold coated with a material that adheres to the surface of the substrate and that has such properties that it enables or facilitates the deposition and/or the adhesion of the load-carrying layer (5) on the substrate (1).

## Revendications

1. Procédé de fabrication d'un composant électriquement conducteur (5) présentant une cavité, dans lequel une couche (5) porteuse et étanche aux fluides constituée d'un matériau électriquement conducteur sous forme de particules, en particulier avec une épaisseur de couche supérieure à 3 micromètres, en particulier supérieure à 20 micromètres, est appliquée sur un substrat soluble (1) de telle manière que le substrat (1) est recouvert de manière étanche aux fluides par la couche (5) et que le substrat (1) est ensuite dissous et au moins partiellement retiré, **caractérisé en ce que** le substrat (1) est déformé, en particulier plié, en même temps que la couche porteuse (5) après l'application de celle-ci et **en ce que** le substrat est ensuite au moins partiellement retiré.

2. Procédé selon la revendication 1, **caractérisé en ce que** la couche (5) porteuse et étanche aux fluides est formée avec une épaisseur de couche inférieure à 20 mm, en particulier inférieure à 5 mm.

3. Procédé selon la revendication 1 ou 2, **caractérisé en ce que** le substrat est réalisé en forme de brin et **en ce que** la couche (5) est appliquée sur la ou les surface(s) extérieure(s) du substrat (1) sur tous les côtés, de sorte que la ou les surface(s) extérieure(s) du substrat est/sont recouverte(s) de manière étanche aux fluides.

4. Procédé selon l'une quelconque des revendications 1 à 3, **caractérisé en ce que** le substrat (1) est constitué au moins partiellement d'un matériau électriquement conducteur, en particulier d'un métal ou d'une matière plastique électriquement conductrice ou d'un matériau électriquement isolant chargé avec des particules conductrices.

5. Procédé selon l'une quelconque des revendications 1 à 4, **caractérisé en ce que** le substrat (1) est constitué au moins partiellement d'un matériau électriquement isolant, en particulier d'une matière plastique, d'une cire, d'une céramique ou d'un matériau thermoplastique.

6. Procédé selon l'une quelconque des revendications 1 à 5, **caractérisé en ce que** le substrat (1) est pré-revêtu d'une matière de pré-revêtement électriquement conductrice, en particulier d'un métal, en particulier sous la forme de microparticules ou de nanoparticules, ou d'une matière plastique conductrice ou de carbone, en particulier sous forme de graphite ou de nanotubes de carbone, avant l'application de la couche porteuse.

7. Procédé selon l'une quelconque des revendications 1 à 6, **caractérisé en ce que** la couche porteuse (5) est appliquée sur le substrat (1) grâce à un procédé galvanique, en particulier électrochimique ou sans courant externe, un procédé de revêtement PVD (dépôt physique en phase vapeur) ou un procédé de revêtement CVD (dépôt chimique en phase vapeur).

8. Procédé selon l'une quelconque des revendications 1 à 7, **caractérisé en ce que** la couche porteuse (5) est appliquée sur le substrat (1) grâce à un procédé de projection plasma ou par immersion du substrat dans un métal en fusion.

9. Procédé selon l'une quelconque des revendications 1 à 8, **caractérisé en ce que** la couche porteuse (5) est appliquée sur le substrat (1) de manière à entourer le substrat de tous côtés de manière étanche aux fluides.

10. Procédé selon l'une quelconque des revendications 1 à 9, **caractérisé en ce que** le substrat (1) est détaché et au moins partiellement éliminé de la couche porteuse (5) par combustion, dissolution dans un solvant, broyage mécanique, décomposition chimique, fusion, évaporation ou sublimation.

11. Procédé selon l'une quelconque des revendications 1 à 10, dans lequel un substrat hélicoïdal est créé et, avant l'application du revêtement, est étiré dans la direction longitudinale des hélices puis muni du revêtement.

12. Procédé selon l'une quelconque des revendications 1 à 11, dans lequel, après application du revêtement sur le substrat, le produit semi-fini constitué du substrat et du revêtement est déformé ou traité à l'aide de techniques de formage.

13. Procédé selon l'une quelconque des revendications 1 à 12, dans lequel, après application du revêtement, le produit semi-fini constitué du substrat (1) et du revêtement (5) est déformé selon une géométrie de bobine et ensuite pressé pour calibrer un corps de bobine sur un espace d'installation disponible et obtenir une mise en contact à plat de spire à spire du corps de bobine, et/ou dans lequel plusieurs composants électriquement conducteurs réalisés sous la forme de conducteurs en forme de brin sont torsadés/torsadés en barre de Roebel conjointement avec le substrat pour obtenir une réduction de l'effet de peau, dans lequel il en résulte une isolation des conducteurs/des composants électriquement conducteurs les uns par rapport aux autres avant ou après le torsadage.

14. Procédé de fabrication d'un substrat destiné à être utilisé dans un procédé selon l'une quelconque des revendications 1 à 13, **caractérisé en ce que** le substrat (1) est coulé dans un moule qui est recouvert d'un matériau qui adhère à la surface du substrat et qui est conçu de sorte qu'il permet ou facilite le dépôt et/ou l'adhérence de la couche porteuse (5) sur le substrat (1).
